# EUROPEAN PATENT SPECIFICATION

(11) **EP 2 120 414 B1**
(45) Date of publication and mention of the grant of the patent: **05.11.2014**
(21) Application number: 08008868.5
(22) Date of filing: 13.05.2008
(51) Int. Cl.: H04L 29/08, H04W 4/02

(54) **Method and communication system for managing location information**
Verfahren und Kommunikationssystem zum Verwalten von Ortsinformationen
Procédé et système de communication pour la gestion d'informations de localisation

(43) Date of publication of application: 18.11.2009
(73) Proprietor: Vodafone Holding GmbH, 40213 Düsseldorf (DE)
(72) Inventor: Leon, German, 40219 Düsseldorf (DE); Leinss, Mirja, 40545 Düsseldorf (DE)
(74) Representative: Jostarndt, Hans-Dieter

(56) References cited:
- WO-A-00/22860
- WO-A-2005/036841

## Description

### Technical field

The present invention relates to a method and a communication system for managing location information. In particular the present invention relates to a method and a communication system, wherein the location information relates to positions of communication devices.

### Background of the invention

Today there is an increasing number of digital communication devices such as personal digital assistance (PDA), portable computers, mobile telephones, palmtop computers, etc.. Sometimes these devices are also equipped with cameras by taking pictures, as well as video and audio recordings. The features and capabilities of the devices lead to an increasing number of data files that may be exchanged between different devices and users by wireless or wired networks. As an example, a mobile telephone is no longer limited for receiving and making voice calls but it may take photographs, receive e-mails, SMS messages and voice messages. The variety of different kinds of communication increases the number of location information significantly. This number of location information is increased even more because one and the same location information of the above mentioned types is frequently copied to a plurality of recipients.

It is known to display on a user equipment information which is influenced by a determined geographical position (location) of the user equipment.

It is furthermore known, to display information about the location of communication devices in a map representation of a geographical area located around the location of the user equipment.

Document WO 00/22860 A1 discloses a method and a system for transmitting data between communication units, in particular for use in a wireless communication network. The method and system sends an automatic notification to a user "A" in case of the entry of a pre-selected user "B" into a pre-determined area (or proximity to a particular location). The notification may further depend on a successful match of user specified parameters. The location of users "A" and "B" is determined by reference to the position of their personal wireless communication unit, such as a mobile telephone or a pager.

### Summary of the invention

It is an object of the current invention, to propose a method and a communication system with reduced data traffic, which allows an adaptation to different preferences of a plurality of users.

The invention includes the method according to claim 1 and the communication system according to claim 9.

Preferred embodiments of the invention are described in the description and are object of the depending claims.

According to a first aspect the present invention suggests a method for managing location information in a communication system comprising a plurality of logical nodes, wherein the location information relates to positions of a plurality of communication devices and wherein the method comprises the following steps,
a) Receiving location information;
b) performing a divided storing of the location information within different logical nodes, wherein a first logical node of the plurality of logical nodes contains location information related to positions of the communication devices located in a first area related to the first logical node and a second logical node of the plurality of logical nodes contains location information related to positions of communication devices located in a second area related to the second logical node;
c) exchanging the location information of the first logical node with the second logical node;
d) performing an evaluation of criteria of a first communication device for a transmission of the location information of the first communication device to a second communication device;
e) performing an evaluation of criteria defined by the second communication device for receiving location information from the first communication device,
f) transmitting the location information related to the geographical position of the first communication device to the second communication device in the case that the first communication device has agreed to the transmission to the second communication device and that the second communication device has agreed to receive the location information related to the geographical position of the first communication device;
g) allowing a simultaneous communication of all communication devices positioned in the same area.

The invention relates to a method and a system for locating a plurality of users and/or exchanging information between a mobile user equipment, e.g. a mobile cellular telephone and a central server. The central server or a logical node in a communication system handles information based on a position of the mobile user equipment.

A preferred embodiment of the invention implements the idea to store - especially on the network - information about preferences of a user for accessing information sent from other users and/or preferences about receivers of information related to him. This information is preferably stored within the network.

Alternatively/additionally it is possible to store this information or at least part of it at a communication device.

A preferred embodiment of the invention allows showing positions of a plurality of persons/locations at the same time.

A preferred embodiment of the invention relates to location based reminders. These reminders are sent to the user of the mobile user equipment and/or somebody else - especially a person belonging to a category predefined for receiving such information. The users which fulfil this condition are called group, respectively user group.

Preferable, the groups are defined by the user.

A preferred embodiment of the invention includes an integration of groups of users. For example it is possible to define special user groups, which are allowed to access certain types of information. A further improvement of this invention - a proposed fall back position as especially sub-claim: different information transmitted by different people via specially chosen information channels.

A preferred embodiment of the invention includes an interactive point of interest.

This interactive point of interest is designed in a way that communication devices are enabled to communicate together through a common communication interface.

A simultaneous communication of all communication devices relating to the same area is allowed, especially positioned in the same area.

According to a preferred embodiment of the invention a position of a plurality of users is shown on a map.

The description of the invention uses the formulation "map" and "map representation". Preferably the term "map" relates to the data about geographical positions, for example geographical coordinates. The term "map representation" underlines more the representation of the positions and/or of communication devices.

However, to those skilled in the art it is obvious, that these terms are quite similar and that descriptions relating to the "map" may also relate to the "map representation" and vice versa.

A preferred embodiment of the invention includes a map representation of an area, especially a geographical area located around the location of one of the user equipments.

The map representation may contain streets, and other points of interest, for example buildings.

In a preferred embodiment of the invention a map which is displayable at a user equipment is generated at a logical node and/or a server.

Alternatively it is possible, that the user equipment generates the map and that the logical node and/or the server support information about locations of communication devices.

Preferably a filtering of the objects to be displayed at the user device is realized according to embodiments of methods described in this application.

A preferred embodiment of the invention proposes to integrate the generation of maps respectively map representations as a service into a communication network, for example a mobile communication network.

Location information of a registered user is made available to other registered users.

However, the current invention allows even more complex filtering technologies.

According to a preferred embodiment of the invention a user of a communication device - corresponding to a second communication device according to the terminology of claim 1 - may define criteria about location information which is of interest to him.

According to a further embodiment of the invention, the second communication device within the terminology of claim 1 may act with regard to other communication devices - as a first communication device and may therefore for themselves define criteria about other second communication devices to which location information should be transmitted.

According to preferred embodiments of the invention the criteria for an access may vary.

Preferred embodiments of the invention may include a filter respectively a filter mechanism.

Examples of filters respectively filter mechanisms which can be used having a distance between the first communication device and the second communication device - corresponding to a distance between a first user and a second user.

Further filter criteria are individual criteria or certain user groups, as for example colleagues, friends or family members.

It is furthermore evident, that the filter criteria can be adapted by users in order to meet their personal demands.

For example it is possible to enable a visibility/a transmission of location information to colleagues only at working time and to disable such a transfer/availability of location information in other times.

Criteria defined by a communication device respectively a user for receiving location information from another user and/or for sending location information to another user may be based on preferences. It is for example possible to define criteria for special groups, for example members of white lists, members of black lists, members of groups relating to working colleagues, family or friends.

For example it is possible that the user defines a white list of communication devices to which information about his location should be send.

Alternatively/additionally the user can define a black list of users which should not obtain the location information.

For those skilled in the art, it is obvious that for unknown users an automatic connection to a certain group can be carried out. For example it is possible to evaluate, if a previously unknown user belongs to a group of working colleagues. In this case a transfer of location information to this user can be handled according to criteria defined for members of the work group.

According to a preferred embodiment of the invention, the position of the plurality of users is shown on a map showing streets, perhaps buildings and points of interest. In a preferred embodiment it is shown in a three dimensional way, especially in a bird's eye view. In principle, a user subscribed to this service can see every other user that also subscribed to this service, however, filter mechanisms can be used (distance to other users, friends, colleagues, etc.)

In order to achieve this embodiment in a reliable way and with an efficient usage of calculation capabilities of the logical node and/or the server, respectively an effective usage of bandwidth the method for managing location information may be carried out for a plurality of communication devices.

According to a preferred embodiment of the invention it is evaluated, if the second communication device is located in the geographical area.

According to a preferred embodiment of the method and the communication system the first communication device is enabled to influence a decision about agreeing to the transmission of the location information to the second communication device depending on the evaluation, if the second communication device is located in the geographical area.

According to a preferred embodiment of the method and the communication system the transmission of the location information to the second communication device is enabled if the second communication device is located in the geographical area.

According to a preferred embodiment of the method and the communication system that the transmission of the location information to the second communication device is disabled if the second communication device is not located in the geographical area.

According to a preferred embodiment of the method and the communication system the method further comprises a step of displaying a graphical representation of the position of communication devices on a screen of a mobile communication device.

The log-file to the mobile communication device upon request, triggered by a timer and/or permanently.

The logical nodes comprise processing means provided for executing the method according to at least one preferred embodiment of the invention.

The logical node may operate in a communication system.

However, implementations, wherein the logical node communicates with the communication devices outside the communication system to which the communication devices are connected is also included in the scope of the invention.

Furthermore embodiments of the invention relate to a communication system, that contains nodes comprising processing means provided for executing the method according to the description in this application, preferably with implementation of one or more of the embodiments described herein.

The communication system contains a plurality of logical node wherein a first logical node contains information about location information related to positions of communication devices located in a first area and wherein a second logical node contains location information related to positions of communication devices located in a second area.

An interchange of location information between the first logical node and the second logical node is.

For those skilled in the art, it is obvious that descriptions regarding to the server may apply to the logical node, respectively the logical node as well.

It is furthermore obvious that also passages relating to the logical node or the logical nodes may relate to the server.

According to an advantageous embodiment of the invention an automatic generation of message is enabled.

A communication device according to the current invention may define criteria for a transmission of a message to another communication device.

Data elements for creating this message may be stored in the device which intends to send the message, the logical note and/or the server.

According to a preferred embodiment it is evaluated if another communication device meets at least one of the criteria. In the case that the other communication device meets at least one or more criteria, an automatic message is generated.

According to a preferred embodiment of the invention at least one or more criteria relate to location information. In this case it is included into the scope of this embodiment, that an automatic message is generated and sent to an communication device, if the communication device enters the definable geographical area according to the invention.

This may include the case, that it is evaluated if an communication device enters the definable geographical area for example a certain zone around the communication device which is preferred for sending the message and/or prepared to initiate a sending of the message. In the case that the communication device enters the definable zone and/or is located in the definable zone, an automatic message is generated.

It is preferred to integrate this embodiment in the described point of interest.

According to a further aspect a method for managing location information is suggested. The method comprises the following steps:
i. Receiving location information;
ii. storing of location information on a server;
iii. creating a log-file on the server; and
iv. transmitting the log-file to a mobile communication device.

The method further comprises the step of displaying a graphical representation of the log-file on a screen of the mobile communication device.

Advantageously the method further comprises the step of extracting the message type from the log-file.

In the preferred embodiment the method further comprises the step of assigning a predetermined symbol for each type of message. In this case the method may further comprise the step of switching the symbol between at least two different states. In this way it is easier for the user to navigate through the log-file.

In a useful embodiment the method further comprises the step of selecting location information from the log-file. Advantageously the method further comprises the step of downloading the selected location information from the server. In this case it is useful if the method further comprises the step of expanding and/or playing back the downloaded location information.

In a practical embodiment the method further comprises, the step of deleting the selected location information from the log-file as well as from the server.

Similarly it is practical if the method further comprises, the step of responding to the selected location information. In this case it may be useful if the method further comprises the step of selecting the type of message for responding to the selected message.

In an advantageous embodiment the method further comprises, the step of linking other information stored on the server with the selected location information. This is very useful if the user wants to combine several location information he has already received.

For technical reasons it is advantageous to link documents stored on the server with the selected location information.

For the transmission several approaches have been found to be useful. The method may therefore comprise the step of transmitting the log-file to the mobile communication device upon request, triggered by a timer and/or permanently.

### Brief description of the drawings

Figure 1 is a schematic illustration of a communication environment.
Figure 2 is a schematic illustration of a specific aspect of Figure 1.
Figure 3 is an exemplary presentation of the invention.

### Detailed description of embodiments of the invention

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, equivalents and alternatives falling within the spirit and scope of the invention as defined by the following appended claims.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below.

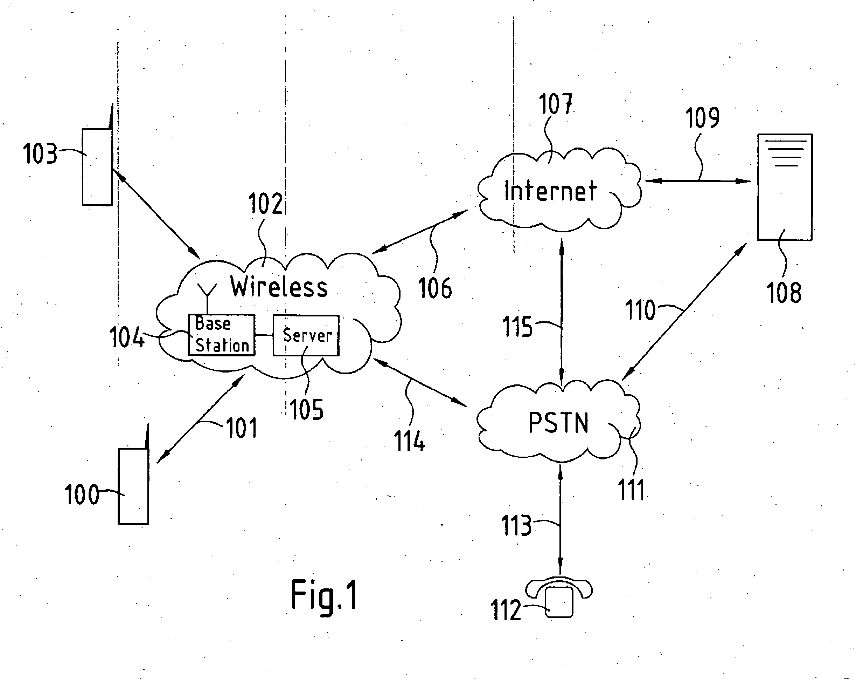

Figure 1 schematically illustrates a communication environment comprising a plurality of networks and devices connected to one or several networks. A communication device 100 of a user is connected via a connection 101 to a wireless network 102. In an exemplary embodiment of the invention, the communication device 100 is a wireless mobile phone. Further wireless communication devices 103 of other users are also connected to the wireless network 102. The wireless network 102 comprises a base station 104 and a server 105. This is conventional technology and not part of the present invention.

The mobile communication device 100 may be a cellular phone, a personal digital assistant (PDA) or the like and is registered in a mobile communication network 102. The mobile communication network 102 is e.g. a public land mobile network (PLMN). The mobile communication network 102 e.g. configured according to the GSM standard or the UMTS standard (UMTS; Universal Mobile Telecommunication System) and comprises a circuit switched domain and a packet switched domain. The mobile communication device 100 accesses the PLMN 102 network wirelessly via a radio access network, which may be configured according to a radio access technology known to a person skilled in the art. In an exemplary embodiment of the present invention the radio access network is configured as GERAM (GSMEDGE radio access network) or UTRAM (UMTS terrestrial radio access network).

The wireless network 102 is connected via a high data rate connection 106 with the internet 107. Computer devices 108 are connected by via DSL-connections 109 with the internet 107. For the sake of simplicity only one computer 108 is shown in figure 1. The shown computer device 108 is also provided with a modem to establish a connection 110 with a public switched telephone network (PSTN) 111. Finally, a telephone 112 is connected via a telephone line 113 with the public switched telephone network 111. The communication environment is completed with high data rate connections 114, 115 between the public switched telephone network 111 on the one side and the wireless network 102 and the internet 107 on the other side. As it is illustrated in figure 1 every communication device is interconnected with any other communication device shown in figure 1 providing a large variety of different types of communication between the different devices. In particular different types of messages can be received on the communication device 100 of the user including conventional voice calls, voice messages, e-mails, SMS-messages and instant messaging messages.

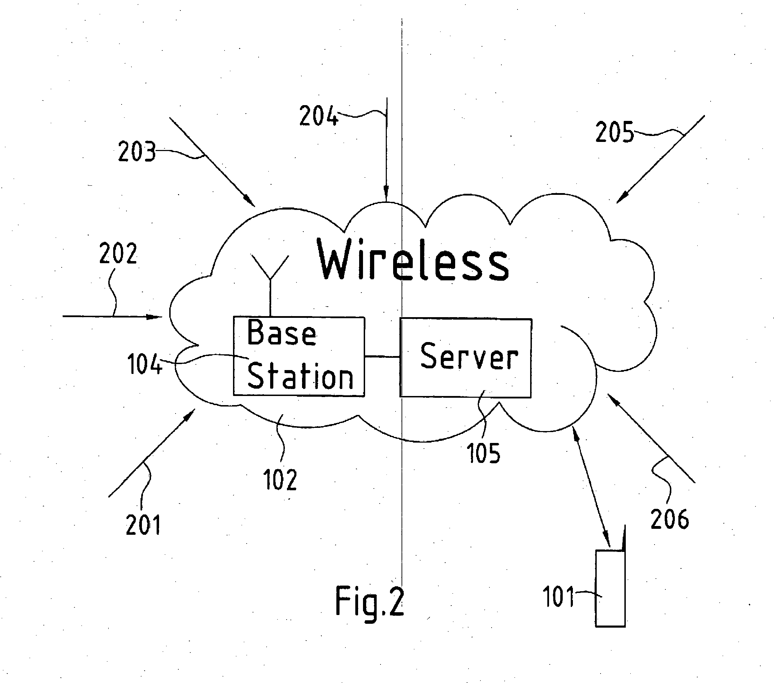

Figure 2 shows a portion of figure 1 emphasing the fact that different kinds of messages are received by the communication device 100 of the user. The different types of messages are symbolized in figure 1 with arrows 201 to 206. The server 105 of the wireless network provider aggregates information and/or location information from a plurality of other servers which are connected with the server 105 as mentioned with regard to figure 1.

The term "location information" shall have a broad meaning in relation to the present invention. The term "location information" especially relates to a geographical position of the object, respectively the user and/or the communication device.

In conventional communication devices such as wireless mobile phones the interfaces for the user to operate the device are usually menu driven. Starting from a top-menu he has to click through a number of sub-menus such as received calls, missed calls, e-mails, SMS-messages, voice messages etc. to check whether he has received new messages. This is a cumbersome task especially for busy people who receive many kinds of location information through different channels. This is for example the case when this person switches on his communication device after a long flight while he may have received a large number of different messages. With this conventional kind of interfaces the user has to navigate through a number of menus and sub-menus due to the variety of communication services available and the different types of messages he has received.

However, the term "location information" may go beyond a geographical definition. It is especially useful to include according to a preferred embodiment of the invention an area, wherein the area may include a geographical area but also other entities which allow to define a certain vicinity between communication devices. For example the area may include a transportation device which for example moves. Examples of such transportation devices are aeroplanes, trains or ships.

According to preferred embodiments of the invention a data file is related to communication devices - especially the further wireless communication devices 103 or their users.

Preferred embodiments of the invention allow to connect data files which are connected to one or more of the other communication devices 103 or their user/users, to the location information.

This implementation has many advantages. For example it is possible, to relate a stored photo showing a user of a further communication device 103 to information about a location of the communication device. This allows to make this photo or other data relating to the user of the communication device 103 available for users which are authorized to receive this information. This allows to show in a map representation the photos and/or the other data relating to the user of the communication device at corresponding location - especially the geographical position - of the user.

As described above, location information according to the present invention goes far beyond geographical information.

For example it is possible that a user who travels by / on a train may obtain a graphical representation of a wagon, wherein preferably photos and/or other data files, for example e-mails or history information about communication - especially telephone calls, mail communication, SMS - are displayed at the current position of the user and/or the communication device 103 at the actual position of the communication device 103.

This can be carried out even in detail, so that for example the user may obtain those information of other passengers which these passengers allow for an access by him.

In one embodiment users may choose, not to give information about their identity or about a photograph of them to other users.

However, they could be willing to give some basic information, for example a photo and/or information about their name to a certain group to other users, for example those users, who are stored at an address book related to them.

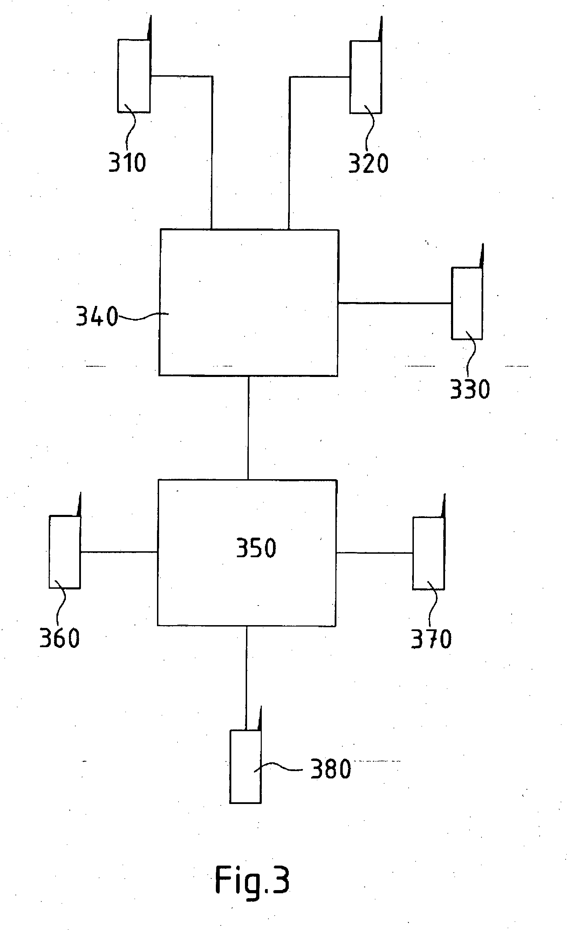

Fig. 3 shows a communication system that contains a plurality of logical nodes 340, 350. A first logical node 340 contains information about location information related to positions of communication devices located in a first area.

The objects 310, 320, 330 located in the first area are communication devices capable of communicating in the communication system.

The second logical node 350 contains location information related to positions of communication devices 360, 370, 380 located in a second area.

According to a preferred embodiment the logical nodes 340, 350 enabled to store location information of communication devices in the area related to them.

For example the first logical node 340 contains location information of communication devices 310, 320, 330 situated in the first area and the second logical node 350 may contain location information about communication devices 360, 370, 380 located in the second area.

This advantageous implementation of the invention facilitates, that the logical nodes make location information available to - preferably selected - communication devices located in the same area.

A divided storage of location information within different logical nodes has several advantages.

Especially data traffic on a network can significantly be reduced.

For those skilled in the art, it is obvious, that the logical nodes 340, 350 can operate as logical nodes in a communication system which allows a communication between the communication devices.

However, the scope of the invention also covers cases, where the logical nodes communicate independently from a communication network with the communication devices located in a related area, especially the described first area and/or second area.

Afterwards without limitations advantages resulting from an installation of several logical nodes are explained:

Referring to the of course only exemplary mentioned case, that a first area according to the invention is a train, the first logical node 340 may store information about communication devices located in the - most probably moving - train to transmit this information between these communication devices as described before.

This implementation has the advantage, that localization information between the communication devices - located in the train can be exchanged between the users.

It is obvious that the described train is only one example of a first area.

Areas according to the invention may include wide variety of geographical or organisatorical areas. For example it is possible to include virtual areas, for example areas which are accessible by a local network, for example a company network as one area according to the invention.

In the case that a first area exists and a data exchange between the first area and a second area could be related by a connection between the logical node 340 of the first area and the logical node 350 of the second area, the first area and the second area may have different shapes.

For example in the case that the first area is a train, the second area may be a train station or an airport.

In this case it is for example possible that a logical node of the train exchanges location information with a second logical node 350 of the train station.

In this example the second logical node 350 may contain information about people located at the train station.

In this case it is for example possible to make information about travellers of a train travelling to the train station available to all users at the train station or - even more preferably - making this information available for a certain selection of users located at the train station as an example of a second area.

If the user who has an allowance to access location information from other users accesses on a map a symbol representing a certain object, for example a communication device 103 of another user, he may move a cursor or click on a touch screen to a symbol - for example - an icon and/or photo representing the user -. This command related to the representation/the icon is interpreted from the communication device of the user who wants to access the information as a select command. The select command triggers a transmission of call-up command from the communication device 100 of the user to the server 105 of the wireless network operator. This call-up command entails the transmission of the selected location information from the server to the mobile communication device. In case of an e-mail message the e-mail becomes visible on a screen of the mobile communication device. In case of a voice message the audio file is transferred from the server to the mobile communication device and the audio file then is played back in the mobile communication device and becomes audible for the user. At the same time the log-file on the server 105 is updated and the updated log-file is transmitted to the mobile communication device 100.

In one embodiment of the present invention it is possible to link documents stored on the server 105 with a location information. In this way the user has an easy access to documents which are relevant for the location information.

According to a preferred embodiment of the invention the files of the location information are stored on the server 105 of the network provider and only the log file is transmitted to the mobile communication device 100. This is particularly advantageous for mobile devices having limitations with regard to the size of the available memory as well as their energy consumption because storing a link and downloading a file is less energy consuming than downloading a potentially big file associated with the location information. In particular during travels it is inconvenient for users if their communication device is running out of energy and becomes inoperative. In the same way it is disturbing for a user if his communication device runs out of memory.

At the same time also the security for the user is increased. If his mobile communication device gets lost or damaged all information is still available on the server 105 of the network provider.

However, it is furthermore included within the scope invention to store location information and/or location based information at other places, for example directly at mobile communication devices capable of utilizing the communication network.

## Claims

1. Method for managing location information relating to positions of a plurality of communication devices in a communication system comprising a plurality of logical nodes operated in the communication system to allow communication between the communication devices, wherein the method comprises the following steps,
a) Receiving the location information;
b) performing a divided storing of the location information within different logical nodes (340, 350), wherein a first logical node (340) of the plurality of logical nodes contains location information related to positions of the communication devices (310, 320, 330) located in a first area related to the first logical node and a second logical node (350) of the plurality of logical nodes contains location information related to positions of communication devices (360, 370, 380) located in a second area related to the second logical node;
c) exchanging the location information of the first logical node with the second logical node;
d) performing an evaluation of criteria of a first communication device for a transmission of the location information of the first communication device to a second communication device;
e) performing an evaluation of criteria defined by the second communication device for receiving location information from the first communication device,
f) transmitting the location information related to the geographical position of the first communication device to the second communication device in the case that the first communication device has agreed to the transmission to the second communication device and that the second communication device has agreed to receive the location information related to the geographical position of the first communication device;
g) allowing a simultaneous communication of all communication devices positioned in the same area.

2. The method according to claim 1,
**characterized in,**
**that** the communication devices are mobile communication devices, wherein the method further comprises a step of displaying a graphical representation of the position of communication devices on a screen of a mobile communication device (100) on a map in a three dimensional way.

3. The method according to claim 2,
**characterized in,**
**that** the map representation includes a map representation of a geographical area located around the location of one of the communication devices.

4. The method according to claim 3,
**characterized in,**
**that** it is evaluated, if the second communication device is located in the geographical area.

5. The method according to claim 4,
**characterized in,**
**that** the first communication device is enabled to influence a decision about agreeing to the transmission of the location information to the second communication device depending on the evaluation, if the second communication device is located in the geographical area.

6. The method according to claim 5,
**characterized in,**
**that** the transmission of the location information to the second communication device is enabled, if the second communication device is located in the geographical area.

7. The method according to claim 5,
**characterized in,**
**that** the transmission of the location information to the second communication device is disabled if the second communication device is not located in the geographical area.

8. Method according to any of the preceding claims,
**characterized in,**
**that** an automatic message is generated if a communication device is located into a definable area and/or moves into the definable area.

9. Communication system comprising a plurality of logical nodes (340, 350) operated in the communication system to allow communication between communication devices, wherein the logical nodes (340, 350) performing a divided storing of location information relating to positions of a plurality of communication devices within different logical nodes (340, 350), wherein a first logical node (340) of the plurality of logical nodes contains location information related to positions of communication devices (310, 320, 330) located in a first area related to the first logical node and wherein a second logical node (350) of the plurality of logical nodes contains location information related to positions of communication devices (360, 370, 380) located in a second area related to the second logical node, wherein the first logical node and the second logical node are arranged to exchange the location information of, wherein the communication system is arranged for executing the method according to claim 1.

10. The communication system according to claim 9,
**characterized in,**
**that** the logical nodes are adapted to make location information available to communication devices located in the same area.

11. The communication system according to claim 9 or 10, **characterized in,**
**that** the areas include virtual areas such as local networks like a company network.

## Patentansprüche

1. Verfahren zum Verwalten von Ortsinformationen, die sich auf die Positionen mehrerer Kommunikationsvorrichtungen in einem Kommunikationssystem beziehen, das mehrere in dem Kommunikationssystem betriebene logische Knoten umfasst, um die Kommunikation zwischen den Kommunikationsvorrichtungen zu ermöglichen, wobei das Verfahren die folgenden Schritte umfasst:
a) Empfangen der Ortsinformationen;
b) Ausführen einer verteilten Speicherung der Ortsinformationen innerhalb verschiedener logischer Knoten (340, 350), wobei ein erster logischer Knoten (340) der mehreren logischen Knoten Ortsinformationen in Bezug auf die Positionen der Kommunikationsvorrichtungen (310, 320, 330) enthält, die sich in einem ersten Gebiet befinden, das sich auf den ersten logischen Knoten bezieht, und ein zweiter logischer Knoten (350) der mehreren logischen Knoten Ortsinformationen in Bezug auf die Positionen der Kommunikationsvorrichtungen (360, 370, 380) enthält, die sich in einem zweiten Gebiet befinden, das sich auf den zweiten logischen Knoten bezieht;
c) Austauschen der Ortsinformationen des ersten logischen Knotens mit dem zweiten logischen Knoten;
d) Ausführen einer Bewertung von Kriterien einer ersten Kommunikationsvorrichtung für eine Sendung der Ortsinformationen der ersten Kommunikationsvorrichtung an eine zweite Kommunikationsvorrichtung;
e) Ausführen einer Bewertung von durch die zweite Kommunikationsvorrichtung definierten Kriterien für den Empfang von Ortsinformationen von der ersten Kommunikationsvorrichtung,
f) Senden der Ortsinformationen, die sich auf die geographische Position der ersten Kommunikationsvorrichtung beziehen, an die zweite Kommunikationsvorrichtung, falls die erste Kommunikationsvorrichtung der Sendung an die zweite Kommunikationsvorrichtung zugestimmt hat und falls die zweite Kommunikationsvorrichtung dem Empfang der Ortsinformationen in Bezug auf die geographische Position der ersten Kommunikationsvorrichtung zugestimmt hat;
g) Zulassen einer gleichzeitigen Kommunikation aller Kommunikationsvorrichtungen, die in demselben Gebiet positioniert sind.

2. Verfahren nach Anspruch 1,
**dadurch gekennzeichnet,**
**dass** die Kommunikationsvorrichtungen Mobilkommunikationsvorrichtungen sind, wobei das Verfahren ferner einen Schritt des Anzeigens einer graphischen Darstellung der Position der Kommunikationsvorrichtungen auf einem Bildschirm einer Mobilkommunikationsvorrichtung (100) auf dreidimensionale Art und Weise auf einer Karte umfasst.

3. Verfahren nach Anspruch 2,
**dadurch gekennzeichnet,**
**dass** die Kartendarstellung eine Kartendarstellung eines geographischen Gebiets enthält, das sich um den Ort einer der Kommunikationsvorrichtungen befindet.

4. Verfahren nach Anspruch 3,
**dadurch gekennzeichnet,**
**dass** bewertet wird, ob sich die zweite Kommunikationsvorrichtung in dem geographischen Gebiet befindet.

5. Verfahren nach Anspruch 4,
**dadurch gekennzeichnet,**
**dass** die erste Kommunikationsvorrichtung in der Lage ist, eine Entscheidung über die Zustimmung zu der Sendung der Ortsinformationen an die zweite Kommunikationsvorrichtung in Abhängigkeit von der Bewertung zu beeinflussen, falls sich die zweite Kommunikationsvorrichtung in dem geographischen Gebiet befindet.

6. Verfahren nach Anspruch 5,
**dadurch gekennzeichnet,**
**dass** die Sendung der Ortsinformationen an die zweite Kommunikationsvorrichtung ermöglicht wird, falls sich die zweite Kommunikationsvorrichtung in dem geographischen Gebiet befindet.

7. Verfahren nach Anspruch 5,
**dadurch gekennzeichnet,**
**dass** die Sendung der Ortsinformationen an die zweite Kommunikationsvorrichtung deaktiviert wird, falls sich die zweite Kommunikationsvorrichtung nicht in dem geographischen Gebiet befindet.

8. Verfahren nach einem der vorhergehenden Ansprüche, **dadurch gekennzeichnet,**
**dass** eine automatische Nachricht erzeugt wird, falls sich eine Kommunikationsvorrichtung in einem definierbaren Gebiet befindet und/oder in das definierbare Gebiet bewegt.

9. Kommunikationssystem, das mehrere logische Knoten (340, 350) umfasst, die in dem Kommunikationssystem betrieben werden, um die Kommunikation zwischen Kommunikationsvorrichtungen zu ermöglichen, wobei die logischen Knoten (340, 350) eine verteilte Speicherung von Ortsinformationen ausführen, die sich auf die Positionen mehrerer Kommunikationsvorrichtungen innerhalb verschiedener logischer Knoten (340, 350) beziehen, wobei ein erster logischer Knoten (340) der mehreren logischen Knoten Ortsinformation in Bezug auf die Positionen der Kommunikationsvorrichtungen (310, 320, 330) enthält, die sich in einem ersten Gebiet befinden, das sich auf den ersten logischen Knoten bezieht, und wobei ein zweiter logischer Knoten (350) der mehreren logischen Knoten Ortsinformationen in Bezug auf die Positionen der Kommunikationsvorrichtungen (360, 370, 380) enthält, die sich in einem zweiten Gebiet befinden, das sich auf den zweiten logischen Knoten bezieht, wobei der erste logische Knoten und der zweite logische Knoten zum Austauschen der Ortsinformation ausgelegt sind, wobei das Kommunikationssystem zum Ausführen des Verfahrens nach Anspruch 1 ausgelegt ist.

10. Kommunikationssystem nach Anspruch 9,
**dadurch gekennzeichnet,**
**dass** die logischen Knoten dafür geeignet sind, Ortsinformation für Kommunikationsvorrichtungen, die sich in demselben Gebiet befinden, verfügbar zu machen.

11. Kommunikationssystem nach Anspruch 9 oder 10,
**dadurch gekennzeichnet,**
**dass** die Gebiete virtuelle Gebiete wie etwa lokale Netze wie ein Unternehmensnetz enthalten.

## Revendications

1. Procédé de gestion d'informations d'emplacement concernant des positions d'une pluralité de dispositifs de communication dans un système de communication comprenant une pluralité de noeuds logiques opérés dans le système de communication pour permettre la communication entre les dispositifs de communication, dans lequel le procédé comprend les étapes suivantes,
a) recevoir les informations d'emplacement ;
b) réaliser un stockage divisé des informations d'emplacement au sein de différents noeuds logiques (340, 350), dans lequel un premier noeud logique (340) de la pluralité de noeuds logiques contient des informations d'emplacement liées à des positions des dispositifs de communication (310, 320, 330) situés dans une première zone liée au premier noeud logique et un second noeud logique (350) de la pluralité de noeuds logiques contient des informations d'emplacement liées à des positions de dispositifs de communication (360, 370, 380) situés dans une seconde zone liée au second noeud logique ;
c) échanger les informations d'emplacement du premier noeud logique avec le second noeud logique ;
d) réaliser une évaluation de critères d'un premier dispositif de communication pour une transmission des informations d'emplacement du premier dispositif de communication à un second dispositif de communication ;
e) réaliser une évaluation de critères définis par le second dispositif de communication pour recevoir des informations d'emplacement du premier dispositif de communication,
f) transmettre les informations d'emplacement liées à la position géographique du premier dispositif de communication au second dispositif de communication au cas où le premier dispositif de communication ait accepté la transmission au second dispositif de communication et où le second dispositif de communication ait accepté de recevoir les informations d'emplacement liées à la position géographique du premier dispositif de communication ;
g) permettre une communication simultanée de l'ensemble des dispositifs de communication positionnés dans la même zone.

2. Procédé selon la revendication 1,
**caractérisé en ce**
**que** les dispositifs de communication sont des dispositifs de communication mobile, dans lequel le procédé comprend en outre une étape d'affichage d'une représentation graphique de la position de dispositifs de communication sur un écran d'un dispositif de communication mobile (100) sur une carte de manière tridimensionnelle.

3. Procédé selon la revendication 2,
**caractérisé en ce**
**que** la représentation cartographique inclut une représentation cartographique d'une zone géographique située autour de l'emplacement d'un des dispositifs de communication.

4. Procédé selon la revendication 3,
**caractérisé en ce**
**qu'**il est évalué si le second dispositif de communication est situé dans la zone géographique.

5. Procédé selon la revendication 4,
**caractérisé en ce**
**que** le premier dispositif de communication est activé pour influencer une décision concernant l'acceptation de la transmission des informations d'emplacement au second dispositif de communication en fonction de l'évaluation si le second dispositif de communication est situé dans la zone géographique.

6. Procédé selon la revendication 5,
**caractérisé en ce**
**que** la transmission des informations d'emplacement au second dispositif de communication est activée si le second dispositif de communication est situé dans la zone géographique.

7. Procédé selon la revendication 5,
**caractérisé en ce**
**que** la transmission des informations d'emplacement au second dispositif de communication est désactivée si le second dispositif de communication n'est pas situé dans la zone géographique.

8. Procédé selon l'une quelconque des revendications précédentes,
**caractérisé en ce**
**qu'**un message automatique est généré si un dispositif de communication est situé dans une zone définissable et/ou se déplace dans la zone définissable.

9. Système de communication comprenant une pluralité de noeuds logiques (340, 350) opérés dans le système de communication pour permettre la communication entre des dispositifs de communication, dans lequel les noeuds logiques (340, 350) réalisant un stockage divisé d'informations d'emplacement concernant des positions d'une pluralité de dispositifs de communication au sein de différents noeuds logiques (340, 350), dans lequel un premier noeud logique (340) de la pluralité de noeuds logiques contient des informations d'emplacement liées à des positions des dispositifs de communication (310, 320, 330) situés dans une première zone liée au premier noeud logique et dans lequel un second noeud logique (350) de la pluralité de noeuds logiques contient des informations d'emplacement liées à des positions de dispositifs de communication (360, 370, 380) situés dans une seconde zone liée au second noeud logique, dans lequel le premier noeud logique et le second noeud logique sont agencés pour échanger les informations d'emplacement de, dans lequel le système de communication est agencé pour exécuter le procédé selon la revendication 1.

10. Système de communication selon la revendication 9, **caractérisé en ce**
**que** les noeuds logiques sont adaptés à rendre des informations d'emplacement disponibles à des dispositifs de communication situés dans la même zone.

11. Système de communication selon la revendication 9 ou 10, **caractérisé en ce**
**que** les zones incluent des zones virtuelles telles que des réseaux locaux comme un réseau d'entreprise.
